# EUROPÄISCHE PATENTANMELDUNG

(11) **EP 1 235 418 A1**
(43) Veröffentlichungstag der Anmeldung: **28.08.2002**
(21) Anmeldenummer: 01440046.9
(22) Anmeldetag: 26.02.2001
(51) Int. Cl.: H04M 15/00, H04Q 7/38

(54) **Verfahren und Vorrichtung zum Berechnen der Nutzung eines gebührenpflichtigen Mobilkommunikationsdienstes**

(71) Anmelder: ALCATEL, 75008 Paris (FR)
(72) Erfinder: Allerborn, Wilhelm, Dipl.-Ing., 71254 Ditzingen (DE); Hupperich, Peter, 71254 Ditzingen (DE)
(74) Vertreter: Rausch, Gabriele, Dr.

(57) **Zusammenfassung**

In modernen Mobilkommunikationsnetzen kann der mobile Teilnehmern schon viele verschiedene Mobilkommunikationsdienste im Bereich der Sprach- und Datendienste nutzen, wie z.B. breitbandige Multimediadienste mit hohen Übertragungsraten. Die Vielfalt der im allgemeinen gebührenpflichtigen Dienste und die Forderung einer hohen Akzeptanz der Dienste beim Teilnehmer führen die Diensteanbieter dazu, immer wieder neue Tarifmodelle zu entwickeln.

Für das automatische Berechnen der Nutzung von gebührenpflichtigen Diensten in einem Mobilkommunikationsnetz (MRN) wird vorgeschlagen, dass zumindest zu Beginn der Nutzung des Mobilkommunikationsdienstes geographische Koordinaten ermittelt werden (3b, 3c), die den Aufenthaltsort des von dem Teilnehmer benutzen Mobilkommunikationsendgerätes (UE) angeben, und dass die Gebühren nach vorgebbaren Tarifzonen berechnet werden, wobei geprüft wird (4a, 4b), zu welcher der Tarifzonen der ermittelte Aufenthaltsort gehört.

Die Vergebührung kann nun auf der Grundlage einer sehr genauen Ortung des Teilnehmers vorgenommen werden, die im Bereich von wenigen Metern liegen kann und die eine feinstrukturierte und von den Abmessungen der Funkzellen völlig unabhängige Bildung von Tarifzonen erlaubt. Der Einsatz der Erfindung auch in nicht-zellularen Netzen möglich.

## Beschreibung

Die Erfindung schlägt ein Verfahren und Vorrichtungen vor zum Berechnen der Nutzung eines gebührenpflichtigen Mobilkommunikationsdienstes durch einen mobilen Teilnehmer in einem Mobilkommunikationsnetz.

Im Rahmen der Mobilkommunikation in modernen Mobilkommunikationsnetzen, wie etwa in GSM-Netzen (Global System for Mobile Communications), kann der mobile Teilnehmern schon viele verschiedene Mobilkommunikationsdienste im Bereich der Sprach- und Datendienste nutzen. In den geplanten UMTS-Netzen (Universal Mobile Telecommunications System) sollen für die Teilnehmer noch mehr und noch hochwertigere Dienste, insbesondere breitbandige Multimediadienste mit Übertragungsraten von max. 2 Mbit/s, zur Verfügung gestellt werden.

Die Vielfalt der im allgemeinen gebührenpflichtigen Dienste und die Forderung einer hohen Akzeptanz der Dienste beim Teilnehmer führen die Diensteanbieter dazu, immer wieder neue Tarifmodelle zu entwickeln. Für das automatische Berechnen der Nutzung von gebührenpflichtigen Mobilkommunikationsdiensten gibt es bereits verschiedene Lösungen, insbesondere folgende Verfahren und Vorrichtungen, von denen die Erfindung ausgeht:

Aus der WO 97/48245 ist ein Gebührenberechnungs-Verfahren bekannt, bei dem als Kriterium zum Berechnen der Nutzung eines gebührenpflichtigen Mobilkommunikationsdienstes die Funkzelleninformation ("cell information") herangezogen wird, um zu prüfen, ob die Funkzelle, in der sich der mobile Teilnehmer aufhält, zu einem Satz von Funkzellen gehört, denen ein preiswerter Tarif zugeordnet ist. Die Funkzelleninformation wird zu Beginn oder auch während der Rufverbindung an die Funkvermittlungsstelle übertragen, die die Berechnung der Gebühren durchführt. Diese Funktion kann auch ein mit der Funkvermittlungsstelle verbundener Dienstesteuerungspunkt ("Service Control Point") übernehmen, also das Element einer IN-Struktur (IN: Intelligentes Netz).

Aus der WO 99/05875 ist ein Mobilkommunikationsnetz mit einer IN-Struktur bekannt, die mehrere Funkzellen zu Tarifzonen zusammenfasst. Eine Vergebührungseinrichtung stellt fest, in welcher Tarifzone sich der Teilnehmer befindet und berechnet die Gebühren für die Nutzung der geführten Anrufe entsprechend des für diese Tarifzone vorgegebenen Tarifs.

Demnach sind Verfahren und Vorrichtungen zum Berechnen der Nutzung eines gebührenpflichtigen Mobilkommunikationsdienstes durch einen mobilen Teilnehmer in einem Mobilkommunikationsnetz bekannt, bei denen für die Gebührenberechnung der Aufenthaltsort des Teilnehmers berücksichtigt wird. Die Angabe des Aufenthaltsorts entspricht jedoch der Ortsangabe der Funkzelle, in der sich der Teilnehmer befindet, oder der Ortsangabe einer aus mehreren Funkzellen gebildeten Tarifzone. Das bedeutet, dass der Aufenthaltsbereich zumindest immer so groß wie eine Funkzelle ist. Selbst wenn man ein Mobilkommunikationsnetz mit kleinen Funkzellen von etwa 300 m Durchmesser annimmt, so ist die Ortsangabe nicht sehr genau. Außerdem funktionieren die bekannten Verfahren ausschließlich in zellularen Mobilkommunikationsnetzen.

Aufgabe der Erfindung ist es daher, ein Verfahren zum Berechnen der Nutzung eines gebührenpflichtigen Mobilkommunikationsdienstes anzugeben, das die oben genannten Nachteile nicht aufweist, sowie Vorrichtungen zur Durchführung des Verfahrens anzugeben.

Gelöst wird die Aufgabe durch ein Verfahren mit den Merkmalen des Anspruchs 1, durch ein Mobilkommunikationsnetz und durch ein Rechenmittel mit den Merkmalen nach einem der nebengeordneten Ansprüche.

Demnach wird vorgeschlagen, dass zum Berechnen der Nutzung eines gebührenpflichtigen Mobilkommunikationsdienstes zumindest zu Beginn der Nutzung des Mobilkommunikationsdienstes geographische Koordinaten ermittelt werden, die den Aufenthaltsort des von dem Teilnehmer benutzen Mobilkommunikationsendgerätes angeben, und dass die Gebühren nach vorgebbaren Tarifzonen berechnet werden, wobei geprüft wird, zu welcher der Tarifzonen der ermittelte Aufenthaltsort gehört.

Mit der Erfindung kann eine Vergebührung auf der Grundlage einer sehr genauen Ortung des Teilnehmers vorgenommen werden. Dabei ist der Einsatz der Erfindung nicht auf zellulare Netze beschränkt, sondern auch in nicht-zellularen Netzen möglich. Die sehr genaue Ortung des Teilnehmers, die im Bereich von wenigen Metern liegen kann, erlaubt eine feinstrukturierte und von den Abmessungen der Funkzellen völlig unabhängige Bildung von Tarifzonen.

Besonders vorteilhafte Ausgestaltungen der Erfindung ergeben sich aus den Unteransprüchen.

Demnach ist es besonders vorteilhaft, wenn das Mobilkommunikationsendgerät mit mindestens zwei Funkfeststationen des Mobilfunknetzes in Funkverbindung steht und wenn die geographischen Koordinaten mittels Messungen von Signallaufzeiten auf diesen Funkverbindungen ermittelt werden. Dadurch wird eine einfache Realisierung der Erfindung möglich, da solche Messungen ohnehin schon im Zusammenhang mit der sogenannten Makrodiversity-Funkübertragung und mit Soft-Handover durchgeführt werden.

Dasselbe gilt auch, wenn das Mobilkommunikationsendgerätes mit mindestens zwei Funkfeststationen des Mobilfunknetzes in Funkverbindung steht und wenn die geographischen Koordinaten mittels Messungen von Signalempfangsfeldstärken auf diesen Funkverbindungen ermittelt werden. In diesem Zusammenhang ergibt sich eine besonders einfache Realisierungsmöglichkeit, wenn an das Mobilkommunikationsendgerät die Standortkoordinaten von zumindest zwei der Funkfeststationen übermittelt werden und wenn in dem Mobilkommunikationsendgerät mittels dieser Standortkoordinaten und den gemessenen Signalslaufzeiten bzw. Signalsempfangsfeldstärken die geographischen Koordinaten des Mobilkommunikationsendgerätes ermittelt werden.

Ein weiterer besonderer Vorteil besteht, wenn zumindest eine Tarifzone vorgegeben wird, die mindestens zwei nicht zueinander benachbarte Aufenthaltsorte umfasst. Dadurch kann eine beliebig räumlich ausgeprägte Tarifzone gebildet werden, bei der auch einzelne Orte, wie z.B. die Hauptwohnung und eine Zweit- oder Ferienwohnung demselben Tarif zugeordnet werden können. Dasselbe gilt z.B. für eine Tarifzone für verschiedene Firmensitze mit Hauptsitz und mehreren Außenstellen.

Weitere besondere Vorteile ergeben sich, wenn die Tarifzonen in Abhängigkeit von dem benutzen Mobilkommunikationsdienst und/oder einem Teilnehmerprofil und/oder einem Mobilkommunikationsendgeräteprofil und/oder dem Wochentag und/oder der Tageszeit vorgegeben werden. Durch diese Maßnahmen, ob einzeln oder in beliebiger Kombination angewendet, wird eine sehr flexible automatische Vergebührung möglich, die eine Plattform für die Einführung von neuen Tarifmodellen bietet und die die Akzeptanz bei den Teilnehmern deutlich erhöht.

Die Erfindung und die sich daraus ergebenden Vorteile werden nun näher anhand eines Ausführungsbeispiels beschrieben, wobei auf die folgenden schematischen Darstellungen Bezug genommen wird:
- Fig. 1,: die den Aufbau eines Mobilkommunikationsnetzes zeigt;
- Fig. 2,: die das Ablaufdiagramm eines Vergebührungs-Verfahrens zeigt;
- Fig. 3,: die verschiedene Muster von Tarifzonen zeigt.

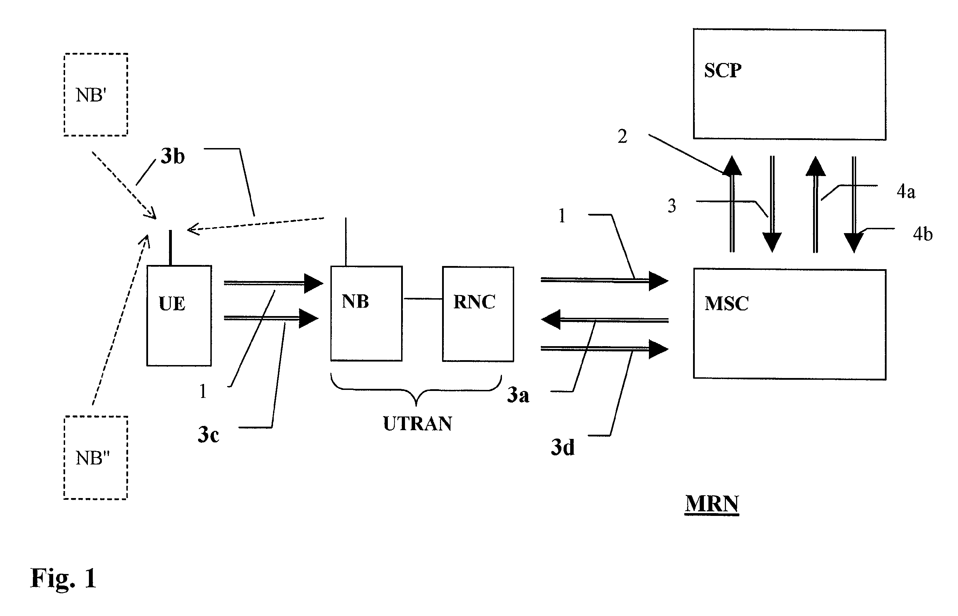

In der Fig. 1 ist schematisch der Aufbau eines erfindungsgemäßen Mobilkommunikationsnetzes MRN dargestellt. Dieses Netz MRN hat eine Funkvermittlungsstelle MSC, an die mehrere Funksubsysteme angeschlossen sind, von denen in der Fig. 1 nur ein Funksubsystem UTRAN beispielhaft dargestellt ist. Ein jedes Funksubsystem umfasst eine Steuereinrichtung RNC, die mit der Funkvermittlungsstelle MSC verbunden ist. Diese Steuereinrichtung RNC wird auch als Radionetzkontroller bezeichnet. An die Steuereinrichtung RNC sind mehrere Funkfeststationen angeschlossen, von denen beispielhaft nur eine Funkfeststation NB in der Fig. 1 dargestellt ist. Eine jede Funkfeststation versorgt eine Funkzelle des Mobilkommunikationsnetzes MRN.

Das in der Fig. 1 dargestellte Netz MRN hat außerdem ein Rechenmittel SCP, das mit der Mobilfunkvermittlungsstelle MSC verbunden ist und das im wesentlichen das Verfahren zur Berechnung der Nutzung von gebührenpflichtigen Mobilkommunikationsdiensten durchführt. In diesem Beispiel ist das Rechenmittel SCP Bestandteil eines Dienstesteuerungspunktes (im englischen: Service Control Point), der Element eines intelligenten Netzes ist. Das intelligente Netz sowie die Funkvermittlungsstelle MSC bilden somit die Teile des Mobilkommunikationsnetzes MRN, die für die Teilnehmerverwaltung und die Durchführung von Diensten sowie für die Vermittlung von Verbindungen zuständig sind.

Das Funksubsystem UTRAN ist derjenige Teil des Netzes, der im wesentlichen für die Durchführung der Funkkommunikation zuständig sind. Dabei stehen die mobilen Teilnehmerendgeräte, von denen ein Mobilkommunikationsendgerät UE in der Fig. 1 beispielhaft dargestellt ist, in Funkverbindung mit zumindest einer Funkfeststation NB.

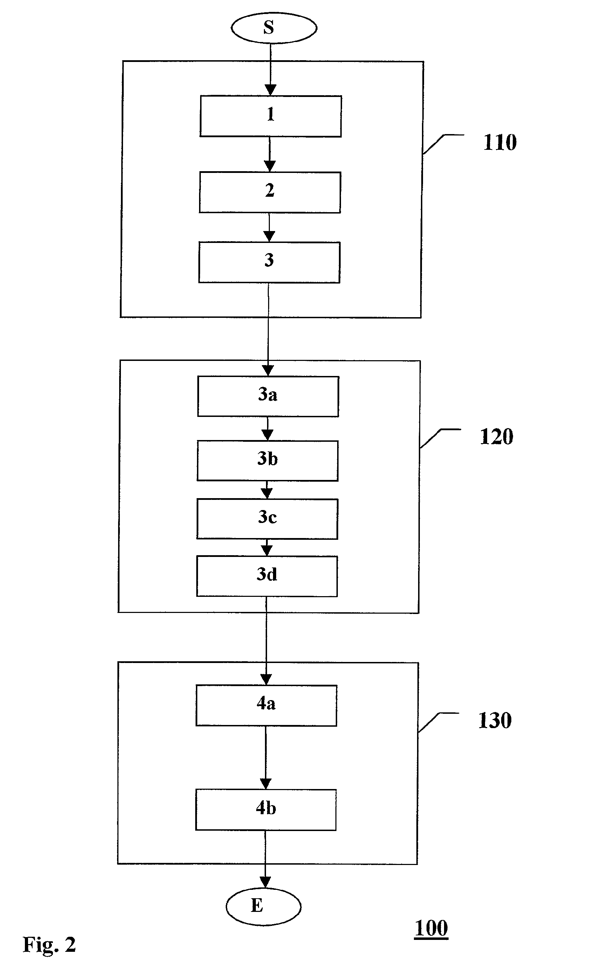

In diesem Beispiel befindet sich nun das Mobilkommunikationsendgerät UE mit drei Funkfeststationen NB, NB' und NB" in Funkverbindung. Dieser Zustand wird auch Makrodiversity-Funkübertragung oder Soft-Handover genannt. In diesem Zustand ist es besonders einfach eine genauere Lokalisierung des Mobilfunkendgerätes UE durchzuführen. Entsprechend der Erfindung wird die Lokalisierung dazu verwendet, die Berechnung von der Nutzung von Mobilkommunikationsdiensten deutlich zu verbessern. Das dafür verwendete und hier vorgestellte Verfahren wird nun näher beschrieben, wobei auf die Fig. 1 und 2 Bezug genommen wird:

Die Fig. 2 zeigt ein Ablaufdiagramm für ein erfindungsgemäßes Verfahren 100, das in drei Abschnitte 110, 120 und 130 unterteilt ist. Jeder Abschnitt wiederum umfasst mehrere einzelne Verfahrensschritte.

Das Verfahren 100 beginnt mit der Startmarke S. In einem ersten Schritt 1 erfolgt der Verbindungsaufbau, wobei zunächst das Mobilkommunikationsendgerät UE eine Setup-Nachricht an das Funksubsystem UTRAN sendet. Dieses leitet die Setup-Nachricht weiter an die Funkvermittlungsstelle MSC. Anschließend wird in einem Schritt 2 von der Funkvermittlungsstelle MSC an den Dienstesteuerungspunkt SCP, der auch das Rechenmittel enthält, eine Abfrage über das Teilnehmerprofil gesendet. Der Dienstesteuerungspunkt SCP prüft das Teilnehmerprofil und stellt in diesem Beispiel fest, dass der Teilnehmer für die Nutzung seines Mobilkommunikationsdienstes ein Tarifmodel gewählt hat, das den Aufenthaltsort des Teilnehmers berücksichtigt.

Nun beginnt der zweite Abschnitt 120 mit einem ersten Schritt 3a, bei dem die Funkvermittlungsstele MSC eine Abfrage an das Funksubsystem UTRAN sendet. Aufgrund dieser Abfrage 3a, die hier auch als "location request" bezeichnet wird, wird das Funksubsystem aufgefordert, den genauen Aufenthaltsort des Mobilkommunikationsendgerätes UE festzustellen. In den nachfolgenden Schritten 3b bis 3c werden die geographischen Daten für den Aufenthaltsort wie folgt ermittelt:

Zunächst werden von den Funkfeststationen NB, NB' und NB" Funksignale an das Mobilkommunikationsendgerät UE gesendet, das die Laufzeiten dieser Funksignale misst. Im einzelnen werden die Laufzeitdifferenzen zwischen diesen Funksignalen gemessen und anschließend in einer Nachricht 3c an das Funksubsystem UTRAN übertragen. In dem Funksubsystem UTRAN werden nun aus diesen Laufzeitunterschieden und der Kenntnis der Standorte der einzelnen Funkfeststationen die genauen geographischen Koordinaten für den Standort des Mobilkommunikationsendgerätes UE berechnet. Diese Vorgehensweise entspricht dem Prinzip des sogenannten Hyperbel-Verfahrens. Es wäre auch denkbar, anstatt der Signallaufzeiten die Signalempfangsfeldstärken zu messen, um die Abstände zwischen dem Mobilkommunikationsendgerät und den jeweiligen Funkfeststationen zu ermitteln. Eine wiederum andere Möglichkeit wäre der Einsatz eins Satellitennavigationsempfängers, z.B. eines GPS-Empfängers (Global Positioning System).

In diesem Beispiel jedoch wird die besonders einfache Realisierung durch die Messung von Signallaufzeiten bevorzugt. Aus den Messwerten und den im System vorliegenden Standortkoordinaten der Funkfeststationen ermittelt das Funksubsystem UTRAN die genauen geographischen Koordinaten für das Mobilkommunikationsendgerät UE. Es ist jedoch auch denkbar, dass diese Berechnung bereits im Mobilkommunikationsendgerät selbst durchgeführt wird.

Schließlich wird von dem Funksubsystem UTRAN die Angabe über die genauen geographischen Koordinaten an die Funkvermittlungsstelle übertragen. Dies geschieht mittels eines sogenannten "location response" in dem Schritt 3d. Danach folgt der dritte Abschnitt 130 des Verfahrens 100:

Die Funkvermittlungsstelle MSC teilt nun dem Rechenmitteln, das in dem Dienstesteuerungspunkt SCP integriert ist, die geographischen Koordinaten mit (Schritt 4a). Das Rechenmittel stellt anhand dieser Koordinaten fest, in welcher Tarifzone sich der Teilnehmer genau befindet. Anschließend wird die Nutzung des Mobilkommunikationsdienstes durch das Rechenmittel entsprechend des festgestellten Tarifes durchgeführt. Sofern sich der Teilnehmer in einem Bereich befindet, der seinen Heimatbereich darstellt, ergeht eine entsprechende Mitteilung von dem Dienstesteuerungspunkt SCP an die Funkvermittlungsstelle MSC (Schritt 4b).

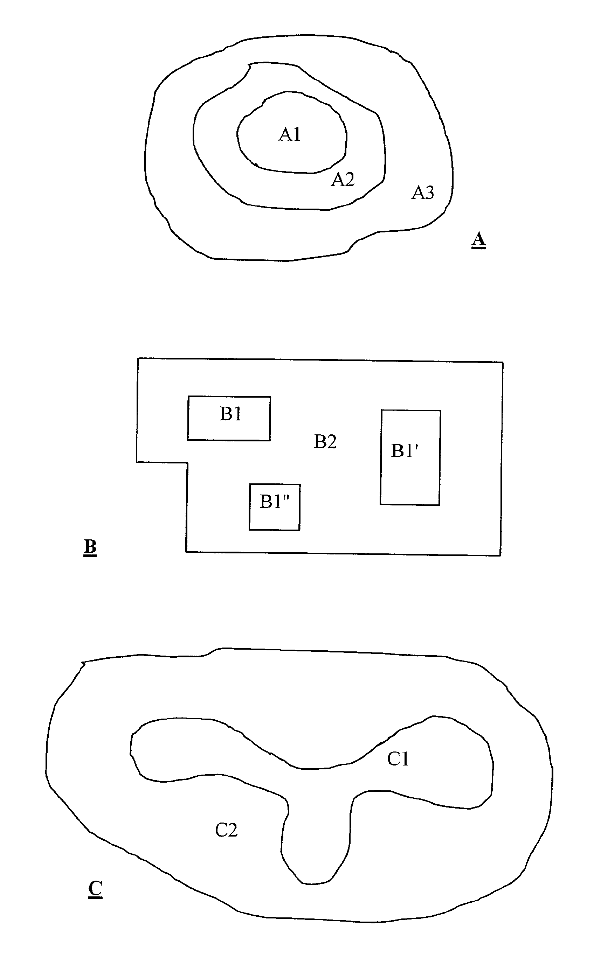

Anhand der Fig. 1 und 2 wurden die Grundzüge der Erfindung näher beschrieben. Es folgt nun die Beschreibung von weiteren Ausgestaltungen, wobei auch auf die Fig. 3 bezug genommen wird:

Die Fig. 3 zeigt schematisch Bespiele für Tarifzonen, die einer Vergebührung zugrunde gelegt werden können. Da die Vergebührung anhand von den geographischen Koordinaten des Aufenthaltsortes durchgeführt wird, können die Tarifzonen anhand von geographischen Daten und somit sehr flexible und unabhängig von den tatsächlichen räumlichen Ausdehnungen der Funkzellen definiert werden.

In einem ersten Beispiel A werden ringförmig Tarifzonen A1, A2 und A3 definiert, wobei die innerste Zone A1 den preiswertesten Tarif und die äußere Zone A3 den teuersten Tarif repräsentieren. Das durch diese Struktur vorgegebene Tarifmodel kann etwa für Teilnehmer angeboten werden, die sich überwiegend in einem Aufenthaltsbereich (z.B. Zuhause A1) und seiner näheren Umgebung (z.B. Stadtmitte A2) aufhalten. Die Grenzen zwischen den Zonen können an die Umgebung angepasst werden. In diesem Beispiel wird ein Teilnehmer angenommen, der in der Innenstadt lebt. Die Zone A1 hat einen Durchmesser von etwa 20 m und deckt den Bereich seiner Wohnung ab. Die Zone A2 deckt mit einem Durchmesser von etwa 250 m die Wohngegend ab und die Zone A3 deckt mit einem Druckmesser von etwa 2 km den Innenstadtbereich ab. Diese drei Zonen repräsentieren günstige Tarife, außerhalb gilt ein Normaltarif. Die Ausdehnung und der Verlauf der Zonen kann auch abhängig gemacht werden vom Wochentag und auch von der Tageszeit. So werden am Wochenende und Nachts die Zonen A1 und A2 zu einer Zone zusammengefasst, so dass für diese Zeit auch im Bereich von A2 der preiswerteste Tarif von A1 gilt.

In der Fig. 3 ist ein weiteres Beispiel B dargestellt, bei dem die Tarifzonen durch gerade Linien begrenzt werden und vorzugsweise als Rechtecke ausgebildet sind. Das hat den Vorteil, das die Zonen durch einfache Vektorgrafik dargestellt werden können, was wiederum die Berechnung der Gebühren vereinfacht. Zudem zeigt Fig. 3 ein Beispiel, bei dem eine Tarifzone aus mehreren nicht zueinander benachbarten Bereichen B1, B1' und B1" gebildet wird. Diese Bereiche sind etwa die bevorzugten Aufenthaltsbereiche des Teilnehmers (z.B. Büro, Werkstatt, Verkaufsraum) und werden mit demselben Tarif, nämlich dem mit der untersten Tarifstufe, belegt. Der größere Bereich (z.B. Firmengelände) stellt die Zone B2 mit der nächsthöheren Tarifstufe dar. Die Struktur kann nicht nur zweidimensional ausgerichtet sein, sondern auch dreidimensional, sofern das Mobilkommunikationsendgerät (s. UE in der Fig. 1) mit mindestens drei Funkfeststationen in Funkverbindung steht:

Denn durch eine Messung der Signallaufzeiten oder Empfangsfeldstärken von den mindestens drei Funksignalen ist eine dreidimensionale Koordinatenberechnung möglich. Gleiches gilt auch, falls das Mobilkommunikationsendgerät die Koordinaten mittels eines Satellitennavigationsempfängers berechnet. Demnach wäre es auch möglich eine Tarifzone dreidimensional zu definieren, also in Form eines räumlichen Gebildes, das etwa genau eine Wohnung oder ein Büro in einem Hochhaus umfasst. Anhand des in der Fig. 3 dargestellten Beispiels B würde dies bedeuten, dass z.B. die Bereiche B1, B1' und B1" jeweils genau ein Stockwerk in einem von drei Hochhäusern abdecken und der Bereich B2 ein ganzes Stadtviertel abdeckt. Dieses Tarifmodell ist beispielsweise besonders attraktiv für Firmen, die an verschiedenen Orten Büros haben. Die Tarifzonen können auch weitaus größere Gebiete umfassen, wie z.B. eine Region B2 mit mehreren Städten, hier mit drei Städten in den Bereichen B1, B1' und B1".

Als ein weiteres Beispiel C zeigt die Fig. 3 die Anordnung von einer ersten Tarifzone C1 und einer zweiten Tarifzone C2, die die erste vollständig umschließt. Die Tarifzonen sind so gestaltet, dass die erste C1 die bevorzugten Aufenthaltsorte des Teilnehmers abdeckt und die zweite Tarifzone C2 die nähere Umgebung davon. Die Gestalt der ersten Tarifzone C1 ist sternförmig ausgeprägt und deckt drei besonders bevorzugte Aufenthaltsorte, wie z.B. Firmenzentrale, Außendienstbüro- und Privatwohnung, ab sowie die zwischen diesen Orten liegenden Verbindungswege. In Bezug auf die Mobilität und die bevorzugten Aufenthaltsorte de Teilnehmers ist die Tarifzone C1, die die preiswerte Zone darstellt, sehr gut an das Teilnehmerprofil angepasst. Weiterhin können noch andere Kriterien bei der Definition der Tarifzonen berücksichtigt werden, wie etwa die Art des genutzten Dienstes oder des verwendeten Mobilkommunikationsendgerätes. Demnach würden z.B. für Kurznachrichtendienste andere Funkzonen definiert als für Sprachdienste oder für Multimediadienste. Oder die Tarifzonen für Mobilfunktelefone wären nicht dieselben wie für mobile Datenendgeräte.

Die Beschreibung gibt nur beispielhaft die vielfältige Einsatzmöglichkeit der Erfindung wieder und ist nicht als abschließende oder beschränkende Darstellung der Erfindung zu verstehen. In diesem Zusammenhang ist auch der Einsatz der Erfindung in Mobilkommunikationsnetzen zu nennen, in denen Paketdaten übertragen und vermittelt werde. So könnte etwa anstelle der in der Fig. 1 dargestellten Funkvermittlungsstelle ein Dienstunterstützungsknoten für Paketdaten, ein sog. Serving GPRS Support Node (GPRS: General Packet Radio Service) die Frage nach dem Aufenthaltsort des Teilnehmer (Location Request) an das Funksubsystem (UTRAN) richten und von diesem dann die Mitteilung über die Standortkoordinaten (Location Response) erhalten. Der Dienstunterstützungsknoten steht dann über eine IN-Schnittstelle (IN: Intelligent Network) mit Dienstesteuerungspunkt (Service Control Point) in Verbindung, der im wesentlichen die Vergebührung durchführt. Oder der Dienstunterstützungsknoten steht mit der Funkvermittlungsstelle in Verbindung, die Teilnehmerdateien mit Gebührendatensätzen (Charging Records) verwaltet.

## Patentansprüche

1. Verfahren (100) zum Berechnen der Nutzung eines gebührenpflichtigen Mobilkommunikationsdienstes durch einen mobilen Teilnehmer in einem Mobilkommunikationsnetz (MRN), bei dem zumindest zu Beginn der Nutzung des Mobilkommunikationsdienstes geographische Koordinaten ermittelt werden, die den Aufenthaltsort des von dem Teilnehmer benutzen Mobilkommunikationsendgerätes (UE) angeben (Abschnitt 120), und bei dem Gebühren nach vorgebbaren Tarifzonen (A1, A2, A3) berechnet werden, wobei geprüft wird, zu welcher der Tarifzonen (A1) der ermittelte Aufenthaltsort gehört (Abschnitt 130).

2. Verfahren (100) nach Anspruch 1, bei dem
das Mobilkommunikationsendgerät (UE) mit mindestens zwei Funkfeststationen (NB, NB', NB") des Mobilfunknetzes (MRN) in Funkverbindung steht und bei dem die geographischen Koordinaten mittels Messungen von Signallaufzeiten auf diesen Funkverbindungen ermittelt werden (Schritte 3b, 3c, 3d).

3. Verfahren nach Anspruch 1, bei dem
das Mobilkommunikationsendgerätes mit mindestens zwei Funkfeststationen des Mobilfunknetzes in Funkverbindung steht und bei dem die geographischen Koordinaten mittels Messungen von Signalempfangsfeldstärken auf diesen Funkverbindungen ermittelt werden.

4. Verfahren nach Anspruch 2 oder 3, bei dem
an das Mobilkommunikationsendgerät die Standortkoordinaten von zumindest zwei der Funkfeststationen übermittelt werden und bei dem in dem Mobilkommunikationsendgerät mittels dieser Standortkoordinaten und den gemessenen Signalslaufzeiten bzw. Signalsempfangsfeldstärken die geographischen Koordinaten des Mobilkommunikationsendgerätes ermittelt werden.

5. Verfahren nach Anspruch 1, bei dem zumindest eine Tarifzone vorgegeben wird, die mindestens zwei nicht zueinander benachbarte Aufenthaltsorte umfasst.

6. Verfahren nach Anspruch 1 oder 5, bei dem die Tarifzonen in Abhängigkeit von dem benutzen Mobilkommunikationsdienst und/oder einem Teilnehmerprofil und/oder einem Mobilkommunikationsendgeräteprofil und/oder dem Wochentag und/oder der Tageszeit vorgegeben werden.

7. Mobilkommunikationsnetz (MRN) mit einem Rechenmitteln (SCP) zum Berechnen der Nutzung eines gebührenpflichtigen Mobilkommunikationsdienstes durch einen mobilen Teilnehmer, das Lokalisierungsmittel (UTRAN, MSC) hat, die mit dem Rechenmittel (SCP) verbunden sind und die zumindest zu Beginn der Nutzung des Mobilkommunikationsdienstes geographische Koordinaten ermitteln, die den Aufenthaltsort des von dem Teilnehmer benutzen Mobilkommunikationsendgerätes (UE) angeben, und dessen Rechenmittel (SCP) Gebühren nach vorgebbaren Tarifzonen (A1, A2, A3) berechnet und dabei prüft, zu welcher der Tarifzonen (A1) der ermittelte Aufenthaltsort gehört.

8. Rechenmittel (SCP) zum Berechnen der Nutzung eines gebührenpflichtigen Mobilkommunikationsdienstes durch einen mobilen Teilnehmer in einem Mobilkommunikationsnetz (MRN), das Lokalisierungsmittel (UTRAN, MSC) hat, die zumindest zu Beginn der Nutzung des Mobilkommunikationsdienstes geographische Koordinaten ermitteln, die den Aufenthaltsort des von dem Teilnehmer benutzen Mobilkommunikationsendgerätes (UE) angeben, und die mit dem Rechenmittel (SCP) verbunden sind, welches Gebühren nach vorgebbaren Tarifzonen (A1, A2, A3) berechnet und dabei prüft, zu welcher der Tarifzonen (A1) der ermittelte Aufenthaltsort gehört.
